# EUROPÄISCHE PATENTANMELDUNG

(11) **EP 0 701 059 A2**
(43) Veröffentlichungstag der Anmeldung: **13.03.1996**
(21) Anmeldenummer: 95110329.0
(22) Anmeldetag: 03.07.1995
(51) Int. Cl.: F02M 37/22

(54) **Filter**

(30) Priorität: 06.09.1994 DE 9414297 U
(71) Anmelder: FILTERWERK MANN & HUMMEL GMBH, D-71631 Ludwigsburg (DE)
(72) Erfinder: Sommer, Bruno, D-71636 Ludwigsburg (DE)
(74) Vertreter: Voth, Gerhard, Dipl.-Ing.

(57) **Zusammenfassung**

Filter mit einem Zulauf und einem Ablauf wobei ein Druckregler im Filtergehäuse integriert ist.

## Beschreibung

Die Erfindung betrifft ein Filter mit einem Zulauf und einem Ablauf.

Derartige Filter sind bekannt, zum Beispiel als Kraftstoffilter in verbrennungsmotorgetriebenen Fahrzeugen jeder Art. Bekannt sind auch zwischen Filter und Motor angebrachte Druckregler in Edelstahlausfuhrung, die den Druck in der Kraftstoffleitung begrenzen. Diese bekannte Anordnung von Filter und Druckregelventil ist einmal teileaufwendig, zum anderen wirken sich die Kosten für mehrere Teile nachteilig auf die Gesamtkostensituation aus.

Man könnte nun die einzelnen Elemente sowie die Fertigungsprozesse auf Kostensparpotentiale untersuchen. Dies ist aber einmal zeitaufwendig, was die Kostensituation nicht unbedingt verbessert, zum anderen hat man immer noch verschiedene Baueinheiten.

Es ist somit Aufgabe der Erfindung, ein Filter der eingangs genannten Art dahingehend zu verbessern, daß ein einfach zu montierendes, anwendbares und billiges Mehrzweckmodul geschaffen wird.

Erfindungsgemäß wird diese Aufgabe dadurch gelöst, daß ein Druckregler im Filtergehäuse integriert ist. Dies reduziert die Teilezahl insgesamt und somit die Kosten. Durch die Schaffung lediglich eines Teiles wird auch die Handhabung bei Montage und Demontage nachhaltig verbessert.

Eine vorteilhafte Weiterbildung der Erfindung sieht vor, daß dem Druckregler ein Rücklauf nachgeordnet ist. Dieser Rücklauf leitet die am Druckregler bei zu hohen Leitungsdrücken anfallende Kraftstoffmenge in den Tank zurück.

Weiterhin kann man vorteilhafterweise vorsehen, daß der Druckregler reinseitig oder rohseitig angeordnet ist.

Eine vorteilhafte Weiterbildung sieht vor, daß der Rückstellmechanismus aus Kunststoff und/oder Metall besteht. Weiterhin kann man vorteilhafterweise vorsehen, daß das Filtergehäuse aus Kunststoff und/oder Metall besteht. Der Weg hin zu einem Mehr an Kunststoff hat zum einen ein Gewichts- zum anderen ein Kostenvorteil. Desweiteren sind die Anforderungen an die Recyclingsysteme geringer, je einheitlicher der Anteil von Stoffkomponenten wird.

Eine vorteilhafte Weiterbildung sieht vor, daß der Filtereinsatz Endkappen aus Metall und/oder Papier und/oder Karton aufweist. Je einheitlicher die Stoffbestandteile des Gesamtfilters sind, umso vorteilhafter ist die stoffmäßige Aufarbeitung nach der Betriebszeit des Filters.

Weitere vorteilhafte Weiterbildungen ergeben sich aus den Unteransprüchen.
- Figur 1: Längsschnitt durch ein Kraftstoffilter mit Kunststoffgehäuse und reinseitig angeordnetem Druckregler,
- Figur 2: Längsschnitt durch ein Kraftstoffilter mit Metallgehäuse ohne Stützrohr,

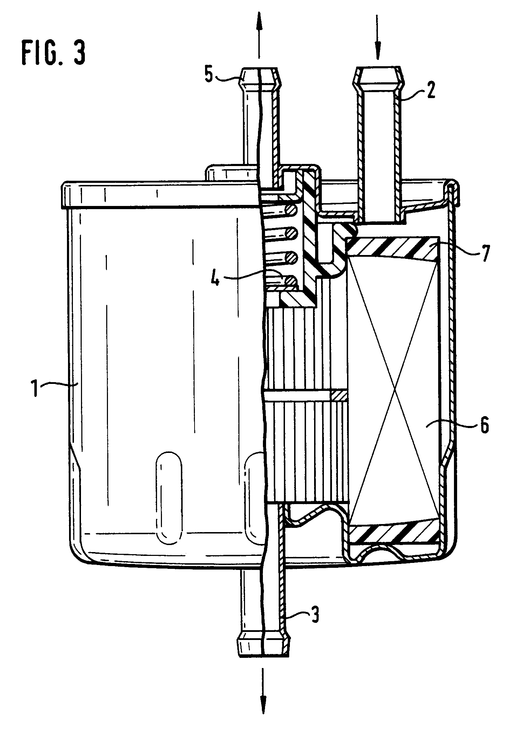

- Figur 3: Längsschnitt durch ein Kraftstoffilter mit Metallgehäuse und Stützrohr,
- Figur 4: Längsschnitt durch ein Kraftstoffilter mit rohseitiger Druckregleranordnung.

Das Kraftstoffilter besteht aus einem Gehäuse 1 mit einem Zulauf 2 und einem Ablauf 3. Im Filtergehäuse ist ein Druckregler 4 integriert. Der Druckregler 4 wirkt bei zu hohen Drücken als Bypass und leitet überflüssige Kraftstoffmengen über einen Rücklauf 5 in den Tank zurück.

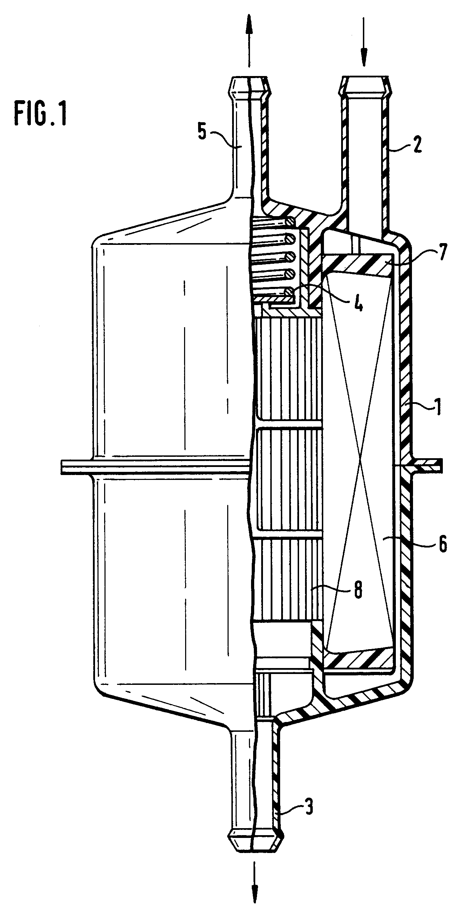

In Figur 1 ist ein Filter mit Gehäuse 1 aus Kunststoff dargestellt, bei dem der Druckregler 4 reinseitig angeordnet ist. Im inneren des Gehäuses befindet sich ein Filtereinsatz 6, der aus sternförmig gefaltetem Papier besteht. Die Endkappen 7 des Filtereinsatzes bestehen aus Metall oder sind in der Kunststoffausführung des Filtergehäuses 1 metallfrei. In Figur 1 ist im Filtereinsatz ein Stützrohr 8 zu dessen Stabilitätssteigerung integriert.

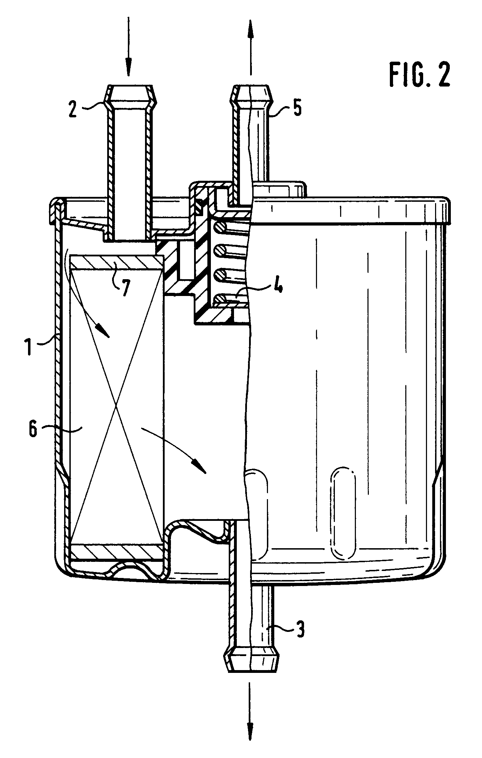

Figur 2 stellt eine Variante mit Metallgehäuse dar, bei der der Druckregler 4 reinseitig angebracht ist, der Filtereinsatz ist selbsttragend ausgeführt.

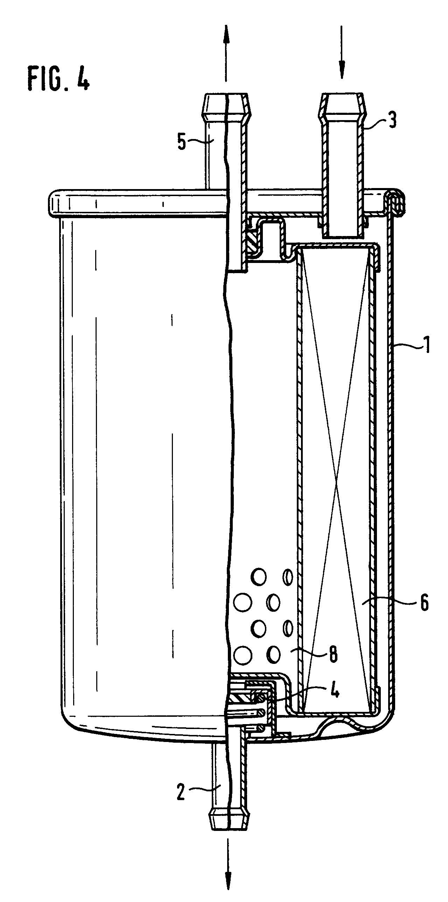

In Figur 4 wird eine Variante gezeigt, bei der der Druckregler rohseitig angebracht ist.

## Patentansprüche

1. Filter mit einem Zulauf und einem Ablauf, dadurch gekennzeichnet, daß ein Druckregler im Filtergehäuse integriert ist.

2. Filter nach Anspruch 1 , dadurch gekennzeichnet, daß dem Druckregler ein Rücklauf nachgeordnet ist.

3. Filter nach einem oder mehreren der vorgenannten Ansprüche, dadurch gekennzeichnet, daß der Druckregler reinseitig oder rohseitig angeordnet ist.

4. Filter nach einem oder mehreren der vorgenannten Ansprüche, dadurch gekennzeichnet, daß der Druckregler einen elastischen Rückstellmechanismus aufweist.

5. Filter nach einem oder mehreren der vorgenannten Ansprüche, dadurch gekennzeichnet, daß der Rückstellmechanismus aus Kunststoff und/oder Metall besteht.

6. Filter nach einem oder mehreren der vorgenannten Ansprüche, dadurch gekennzeichnet, daß das Filtergehäuse aus Kunststoff und/oder Metall besteht.

7. Filter nach einem oder mehreren der vorgenannten Ansprüche, dadurch gekennzeichnet, daß der Filtereinsatz aus Papier und/oder einem vollständig oder überwiegend aus mechanisch adhäsiv oder kohäsiv verfestigten Faserstoffschichten bestehendem, vorwiegend textilem Flächengebilde besteht.

8. Filter nach einem oder mehreren der vorgenannten Ansprüche, dadurch gekennzeichnet, daß der Filtereinsatz gefaltet ist.

9. Filter nach einem oder mehreren der vorgenannten Ansprüche, dadurch gekennzeichnet, daß der Filtereinsatz Endkappen aus Metall und/oder Papier und/oder Karton aufweist.

10. Filter nach einem oder mehreren der vorgenannten Ansprüche, dadurch gekennzeichnet, daß der Filtereinsatz selbsttragend ausgeführt ist.

11. Filter nach einem oder mehreren der vorgenannten Anprüche, dadurch gekennzeichnet, daß der Filtereinsatz mit einem Stützrohr versehen ist.

12. Filter nach einem oder mehreren der vorgenannten Ansprüche, dadurch gekennzeichnet, daß der Rückstellmechanismus eine Spiralfeder und/oder eine Tellerfeder oder ein komprimierbarer Gummiblock ist.
